# EUROPEAN PATENT APPLICATION

(11) **EP 2 741 461 A1**
(43) Date of publication of application: **11.06.2014**
(21) Application number: 12306540.1
(22) Date of filing: 07.12.2012
(51) Int. Cl.: H04L 29/06, G06F 21/34

(54) **Method of allowing communication between a secure element and a server**

(71) Applicant: Gemalto SA, 92190 Meudon (FR)
(72) Inventor: Garreau, Eric, 13705 La Ciotat (FR); Amiel, Patrice, 13705 La Ciotat (FR); Mallet, Lionel, 13705 La Ciotat (FR)

(57) **Abstract**

The invention is a method of allowing authenticated communication between a secure element and a server. The secure element is comprised in a device containing an executing environment distinct from the secure element and able to run an Admin agent adapted to establish a secure communication channel with the server through a network. The secure element is devoid of means able to establish the secure communication channel with the server. The method comprises the steps of
- at the request of the Admin agent, generating an authenticating data by using a secret data stored in the secure element and sending the authenticating data to the Admin agent,
- establishing the secure communication channel between the Admin agent and the server by authenticating the Admin agent thanks to the authenticating data,
- extending the secure communication channel to the secure element by routing, in the Admin agent, data exchanged between the secure element and the server.

## Description

### (Field of the invention)

The present invention relates to methods of allowing communication between a secure element and a server. It relates particularly to methods of allowing authenticated communication between a secure element and a remote server.

### (Background of the invention)

A secure element is a secure device which is intended to be hosted in a machine like a mobile phone, a Machine-to-Machine (M2M) device, or any host machine requiring secure computing. A secure element may be removable like a Universal Integrated Circuit Card (UICC) or a secure memory card. A secure element may be welded to its hosting machine; such secure element is called embedded secure element. A secure element may contain an application intended to be called by the connected hosting machine. A secure element may contain computing means (like cryptographic services) or a secure storage means intended to be used by the connected hosting machine.

The GlobalPlatform Device - Secure Element Remote Application management Version 1.0 (May 2011, ref GPD_SPE_008) requests that the host machine must comprise an Admin Agent application which is in charge of the management of the Administration protocol for communicating with a server in charge of administration of the Secure Element. The Admin Agent is able to forward the administration scripts to the secure element. The administration server is considered as a HTTP server and the Admin Agent is considered as a HTTP client.

As long as the Admin Agent is fully managed as a piece of software running in a non-secured environment, there is a risk of attack leading to the stealing of credentials used for the authentication of the Admin Agent by the administration server. Thus from the administration server point of view, such an attack may lead to Denial-Of-Service attacks against the administration server.

There is a need for strengthening the management of the Admin Agent.

### (Summary of the Invention)

An object of the invention is to solve the above mentioned technical problem.

The object of the present invention is a method for allowing authenticated communication between a secure element and a remote server. The secure element is comprised in a device which comprises an executing environment distinct from the secure element. The executing environment is able to run an Admin agent adapted to establish a secure communication channel with the remote server through a network. The secure element is devoid of means able to establish the secure communication channel with the remote server. The method comprises the following steps:
- at the request of the Admin agent, generating an authenticating data by using a secret data stored in the secure element and sending the authenticating data from the secure element to the Admin agent,
- establishing the secure communication channel between the Admin agent and the remote server by authenticating the Admin agent thanks to the authenticating data,
- extending the secure communication channel to the secure element by routing data exchanged between the secure element and the remote server, the routing being made in the Admin agent.

Advantageously, the authenticating step may be performed with a TLS Mutual Authentication scheme and the authenticating data may be a TLS MasterSecret.

Advantageously, the authenticating step may be performed with a HTTP Digest Access Authentication scheme and the authenticating data may be a Digest.

Advantageously, the authenticating step may be performed with an OTP scheme and the authenticating data may be an OTP data.

Advantageously, the device may comprise a Universal Integrated Circuit Card (UICC) and the network may be a telecommunication network whose access is allowed thanks to a subscription data stored in the Universal Integrated Circuit Card.

Advantageously, the Admin agent may access the network via a Wi-Fi session.

Another object of the invention is a device comprising a secure element and an executing environment distinct from the secure element. The executing environment is able to run an Admin agent adapted to establish a secure communication channel with a remote server through a network. The secure element is devoid of means able to establish the secure communication channel with the remote server. The secure element comprises a secret data and a generating means adapted to generate an authenticating data by using the secret data. The Admin agent comprises a requesting means adapted to request the generation of an authenticating data to the secure element. The Admin agent comprises a communication manager adapted to establish the secure communication channel between the Admin agent and the remote server by authenticating the Admin agent thanks to the authenticating data. The Admin agent comprises a routing means adapted to extend the secure communication channel to the secure element by routing data received from the remote server to the secure element and by routing data received from the secure element to the remote server.

Advantageously, the communication manager may be adapted to authenticate the Admin agent according to a TLS Mutual Authentication scheme and the authenticating data may be a TLS MasterSecret.

Advantageously, the communication manager may be adapted to authenticate the Admin agent according to a HTTP Digest Access Authentication scheme and the authenticating data may be a Digest.

Advantageously, the communication manager may be adapted to authenticate the Admin agent according to an OTP scheme and the authenticating data may be an OTP data.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically an example of a system comprising a remote server and a device hosting an Admin Agent according to the invention;
- Figure 2 depicts schematically an example of architecture of an Admin Agent according to the invention;
- Figure 3 is an example of a flowchart for authenticating the Admin Agent by using a TLS mutual authentication scheme according to the invention;
- Figure 4 is an example of a flowchart for authenticating the Admin Agent by using a HTTP Digest Access authentication scheme according to the invention; and
- Figure 5 is an example of a flowchart for authenticating the Admin Agent by using a One-Time-Password authentication scheme according to the invention.

### (Detailed description of the preferred embodiments)

The invention may apply to all kinds of device comprising a secure element intended to be administrated by a remote server. These devices may be devices like mobile phone, Personal Computer, Tablet PC, or Machine-To-Machine devices.

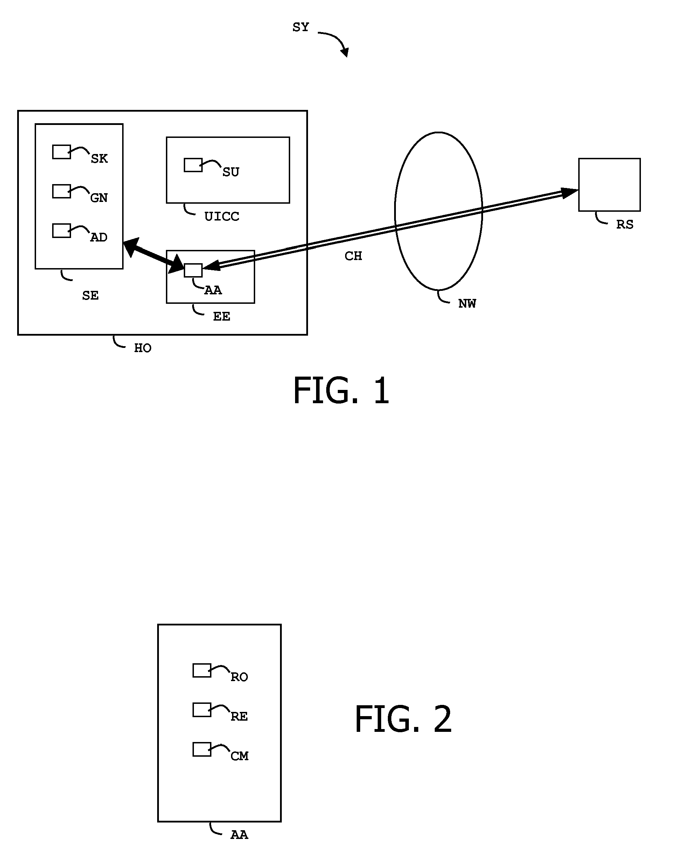

**Figure 1** shows schematically an example of architecture of a system SY comprising a remote server RS and a device HO hosting an Admin Agent AA according to the invention.

The device HO comprises an executing environment EE which contains the Admin Agent AA. The Admin Agent AA is a software application. For instance, the Admin Agent AA may be an application developed in Java and the executing environment EE may be the Java Runtime Environment (JRE). Alternatively, the Admin Agent AA may be an application developed in Java Card and the executing environment EE the Java Card Runtime Environment (JCRE). In another embodiment, the Admin Agent AA may be a software application running in an executing environment EE which is implemented as a hardware component.

The device HO comprises a secure element SE. The secure element SE comprises a secret data SK and a generating means GN. The generating means GN is adapted to generate an authenticating data AD from the secret data SK. The secret data SK corresponds to the credentials required for computing the authenticating data AD that is needed for authenticating the Admin Agent AA to the server RS. The generating means GN is able to use at least one input parameter provided by the Admin Agent AA for generating the authenticating data AD.

In the example of Figure 1, the device HO is a mobile phone comprising a Universal Integrated Circuit Card (UICC). This UICC contain subscription data SU which allow connecting the network of a Mobile operator. For example, the subscription data SU comprises an IMSI (International Mobile Subscriber Identity) and a KI (Authentication Key) which are well known in telecom domain.

In the present description, the secure element SE is not a UICC. In other words, the secure element SE is devoid of means able to establish a secure communication channel with the remote server RS.

The Admin Agent AA is able to establish a communication session CH with the remote server RS through a network NW. Advantageously, the network NW is the Telecom network of a Mobile operator (i.e. data going out the device HO are conveyed Over-The Air). Alternatively the network NW may be a combination of several networks. For instance, the Admin Agent AA may access the remote server RS through a Local Area Network (LAN) connected to the Internet. The LAN may use the Wi-fi technology.

According to the invention, the device HO may be devoid of UICC. In this case, the Admin Agent AA may access the remote server RS through the Internet or through a combination of several networks.

**Figure 2** shows schematically architecture of the Admin Agent AA according to the invention.

The Admin Agent AA comprises a requesting means RE which is adapted to request the generation of an authenticating data AD to the secure element SE. Advantageously, the requesting means RE is able to get a parameter data from the remote server RS and to forward this parameter data to be used as an input data by the generating means GN of the secure element SE. For instance, the parameter data may be a challenge having a random value.

The Admin Agent AA comprises a communication manager CM adapted to establish a secure communication channel CH between the Admin agent AA and the remote server RS by authenticating the Admin agent AA thanks to the authenticating data AD provided by the generating means GN of the secure element SE.

The Admin agent AA comprises a routing means RO which is adapted to route data received from the remote server RS to the secure element SE and to route data received from the secure element SE to the remote server RS. In other words, the routing means RO is adapted to extend the secure communication channel CH to the secure element SE.

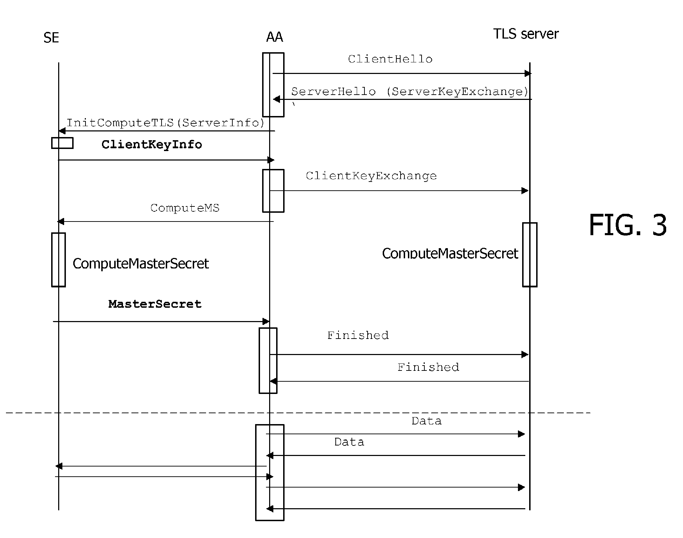

**Figure 3** shows a first example of a flowchart for authenticating the Admin Agent AA by using a Transport Layer Security (TLS) mutual authentication scheme according to the invention.

The Admin agent AA and the secure element SE are embedded in a host device HO. They are similar to those described at Figure 1.

A TLS server is a distant machine which may be considered as a remote server.

At a first step, the Admin Agent AA acts as a client which tries to connect the TLS server. For instance a "ClientHello" request is sent to the TLS server by the Admin Agent AA. In response to the first request, the TLS server sends a message at a second step. This "ServerHello" message contains TLS server data requesting a client authentication (server certificate, server random, selected ciphersuite, Certificate Authority for client authentication), as defined by RFC 2246 standard and uppers.

At a third step, the Admin Agent AA sends a message intended to get TLS ClientKeyInfo from the secure element SE. For instance, the message may be "InitComputeTLS" message containing the server data previously provided by the TLS server. In response, the secure element SE sends a message to the Admin Agent AA for providing client key information (client certificate and certificate verify) at a fourth step. At a fifth step, the client key information is sent to the TLS server as the "ClientKeyExchange" message.

At a sixth step, the Admin Agent AA sends a request to the secure element SE in order to start the generation of the TLS MasterSecret by the secure element SE. For instance, the message may be a "ComputeMS" message. At a seventh step, the secure element SE computes a TLS Mastersecret by using handshake data and the secret data SK and sends back the computed TLS Mastersecret to the Admin Agent AA. The computed TLS Mastersecret is the authenticating data AD of Figure 1. An advantage of the invention is that this MasterSecret is disclosed to the Admin Agent AA for one session only, preventing reuse in further sessions. At an eighth step, the TLS server computes its own TLS Mastersecret by using the client key information received by the TLS server at the fifth step.

At a ninth step, the Admin Agent AA and the TLS server establish a secure communication channel by exchanging "Finished" messages, related to their respective computed TLS Mastersecret. The authentication can be successful only if the TLS Mastersecret computed by the secure element SE corresponds to the TLS Mastersecret computed by the TLS server.

Then the secure communication channel is used, as described in the GlobalPlatform Device - Secure Element Remote Application management Version 1.0 (May 2011, ref GPD_SPE_008), by the Admin Agent AA to route data exchanged between the TLS server and the secure element SE.

The TLS server may send data to upgrade the content of the secure element SE. For example, the server may send a script and applicative data intended to be stored in the secure element SE.

The example of flowchart described at Figure 3 is well suited for computing any secret intended to be used for establishing a secure communication channel between the Admin Agent AA and the TLS server.

This embodiment could also be used in order to establish in the existing secure channel a new secure session with a remote server behind the TLS server. (i.e. a remote server reachable through the TLS server)

The secret data SK used by the secure element SE for computing the TLS Mastersecret may be a Client certificate / Key pair (PKI type authentication) or a Preshared Secret key. In this case, the TLS handshake is made according to RFC 4279, and the secret data SK is used for both the authentication of the Admin Agent AA and the computing of the TLS Master Secret.

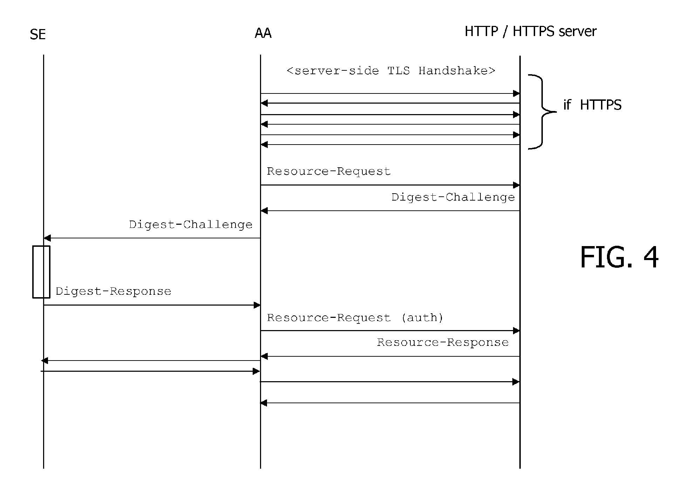

**Figure 4** shows a second example of a flowchart for authenticating the Admin Agent AA by using a HTTP (HyperText Transfer Protocol) Digest Access authentication scheme according to the invention.

The Admin agent AA and the secure element SE are embedded in a host device HO. They are similar to those described at Figure 1. A HTTP server is a distant machine which may be considered as a remote server. This server is generally able to manage a TLS ciphered session, and in this case it is seen as a standard HTTPS server (server-side authentication). T h e invention applies to both HTTP/HTTPS cases, offering a strong client authentication.

During a session with the server, the Admin Agent AA sends a message to the HTTP/HTTPS server for requesting a restricted resource data. For instance, the message may be a "Resource-Request" message as defined by RFC 2617 and uppers.

In response, the HTTP/HTTPS server sends a challenge to the Admin agent AA. For instance, the message may be a "Digest-Challenge" message.

Then the Admin Agent AA sends a message intended to initiate the generation of a Digest by the secure element SE. In particular, the message may comprise the challenge previously provided by the HTTP/HTTPS server. Then the secure element SE computes the Digest from the challenge and from the secret data SK stored into the secure element SE. Then the secure element SE sends the computed Digest to the Admin Agent AA. For instance, the message may be a "Digest-response" message.

Then the Admin Agent AA sends the digest back to the HTTP/HTTPS server in order to authenticate and be granted to access the resource.

Then the secure communication channel is used, as described in the GlobalPlatform Device - Secure Element Remote Application management Version 1.0 (May 2011, ref GPD_SPE_008), by the Admin Agent AA to route data exchanged between the HTTP/HTTPS server and the secure element SE.

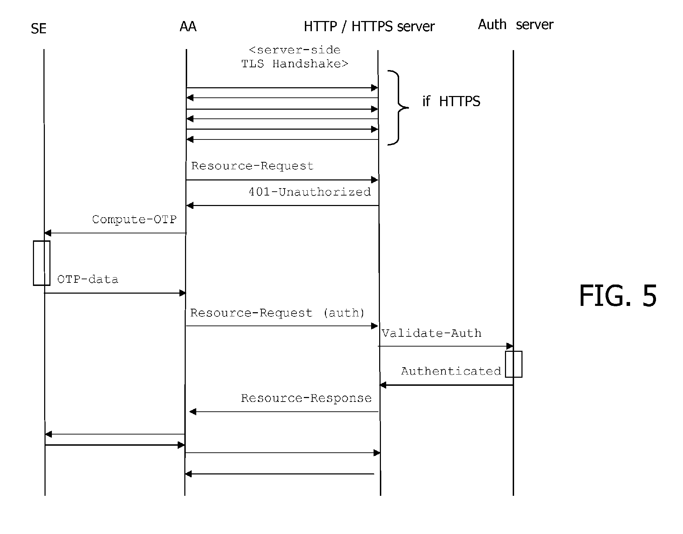

**Figure 5** shows a third example of a flowchart for authenticating the Admin Agent AA by using a One-Time-Password authentication scheme according to the invention.

The Admin agent AA and the secure element SE are embedded in a host device HO. They are similar to those described at Figure 1. A HTTP server is a distant machine which may be considered as a remote server. This server is generally able to manage a TLS ciphered session, and in this case it is seen as a standard HTTPS server (server-side authentication). The invention applies to both HTTP/HTTPS cases, offering a strong client authentication. An Authentication server named Auth server provides a service of authentication of One-Time-Password.

During a session with the server, the Admin Agent AA sends a message to the HTTP/HTTPS server for requesting a restricted resource data. For instance, the message may be a "Resource-Request" message as defined by RFC 2616 standard.

In response the HTTP/HTTPS server sends a challenge to the Admin agent AA. For instance, the message may be a "401-Unauthorized" message.

Then the Admin Agent AA sends a message intended to initiate the generation of an OTP by the secure element SE. In particular, the message may comprise a challenge previously provided by the HTTP/HTTPS server (the realm may be used as an initial vector to generate the OTP). The HTTP/HTTPS server may either generate the challenge or retrieve the challenge from the Auth server. Then the secure element SE computes the One-Time-Password from the received challenge and from the secret data SK stored into the secure element. Then the secure element SE sends the computed OTP to the Admin Agent AA.

Then the Admin Agent AA and the HTTP/HTTPS server wish to establish a secure communication channel by authenticating the Admin Agent AA thanks to the computed OTP. The HTTP/HTTPS server relies on the Auth server for authenticating the OTP provided by the Admin Agent AA, and finally authenticates the client.

Then the secure communication channel is extended to the secure element SE by the Admin Agent AA which routes data exchanged between the HTTP/HTTPS server and the secure element SE.

In the above-described examples, the secure element SE and the Admin Agent AA may exchange data through Application Protocol Data Unit (APDU) as described in IS07816-4 standard. Moreover in order to prevent a hostile application (hosted in the device HO for example) to access the secure element SE, the access control mechanisms may be used to ensure that a trusted Admin Agent only is trying to access the secure element SE. Mechanisms such as the Access Control Files defined in the JSR 177 for J2ME running environment, or the Secure Element Access Control defined in the GlobalPlatform Secure Element Access Control specification can be used for that. Both those mechanisms use the secure element to store access control rules that states which application hosted in a device can access a given application hosted in the secure element. This is then the device execution environment to read and to apply those rules.

The connection between the Admin Agent AA and the remote server may be based on HTTP or HTTPS (HTTP secure) or any other relevant protocol.

It must be understood, within the scope of the invention, that the above-described embodiments are provided as non-limitative examples. For instance, the Admin Agent AA may communicate with the distant server through any kind of wired network or wireless network like Wi-Fi.

Advantageously, data which is exchanged between the remote server and the secure element SE may be ciphered by using any encryption scheme like SCP-02 as defined by the GlobalPlatform Card Specification, or any point-to-point private ciphering method. For instance, the invention may apply to management of secrets in a Set-top Box controlled by a central authority.

## Claims

1. A **method** for allowing authenticated communication between a secure element (SE) and a remote server (RS), the secure element (SE) being comprised in a device (HO) which comprises an executing environment (EE) distinct from said secure element (SE), said executing environment (EE) being able to run an Admin agent (AA) adapted to establish a secure communication channel (CH) with the remote server (RS) through a network (NW), said secure element (SE) being devoid of means able to establish the secure communication channel (CH) with the remote server (RS),
**characterized in that** the method comprises the following steps:
- at the request of the Admin agent (AA), generating an authenticating data (AD) by using a secret data (SK) stored in the secure element (SE) and sending the authenticating data (AD) from the secure element (SE) to the Admin agent (AA),
- establishing the secure communication channel (CH) between the Admin agent (AA) and the remote server (RS) by authenticating the Admin agent (AA) thanks to the authenticating data (AD),
- extending the secure communication channel (CH) to the secure element (SE) by routing, in the Admin agent (AA), data exchanged between the secure element (SE) and the remote server (RS).

2. A method according to claim 1, wherein the authenticating step is performed with a TLS Mutual Authentication scheme and wherein the authenticating data (AD) is a TLS MasterSecret.

3. A method according to claim 1, wherein the authenticating step is performed with a HTTP Digest Access Authentication scheme and wherein the authenticating data (AD) is a Digest.

4. A method according to claim 1, wherein the authenticating step is performed with an OTP scheme and wherein the authenticating data (AD) is an OTP data.

5. A method according to claim 1, wherein the device (HO) comprises a Universal Integrated Circuit Card (UICC) and wherein the network (NW) is telecom network whose access is allowed thanks to a subscription data (IMSI/KI) stored in the Universal Integrated Circuit Card (UICC).

6. A method according to claim 1, wherein the Admin agent (AA) accesses the network (NW) via a Wi-Fi session.

7. A **device** (HO) comprising a secure element (SE) and an executing environment (EE) distinct from said secure element (SE), the executing environment (EE) being able to run an Admin agent (AA) adapted to establish a secure communication channel (CH) with a remote server (RS) through a network (NW), said secure element (SE) being devoid of means able to establish the secure communication channel (CH) with the remote server (RS),
**characterized in that** the secure element (SE) comprises a secret data (SK) and a generating means (GN) adapted to generate an authenticating data (AD) by using the secret data (SK), **in that** the Admin agent (AA) comprises a requesting means (RE) adapted to request the generation of an authenticating data (AD) to the secure element (SE), **in that** the Admin agent (AA) comprises a communication manager (CM) adapted to establish the secure communication channel (CH) between the Admin agent (AA) and the remote server (RS) by authenticating the Admin agent (AA) thanks to the authenticating data (AD) and **in that** the Admin agent (AA) comprises a routing means (RO) adapted to extend the secure communication channel (CH) to the secure element (SE) by routing data received from the remote server (RS) to the secure element (SE) and by routing data received from the secure element (SE) to the remote server (RS).

8. A device (HO) according to claim 8, wherein the communication manager (CM) is adapted to authenticate the Admin agent (AA) according to a TLS Mutual Authentication scheme and wherein the authenticating data (AD) is a TLS MasterSecret.

9. A device (HO) according to claim 8, wherein the communication manager (CM) is adapted to authenticate the Admin agent (AA) according to a HTTP Digest Access Authentication scheme and wherein the authenticating data (AD) is a Digest.

10. A device (HO) according to claim 8, wherein the communication manager (CM) is adapted to authenticate the Admin agent (AA) according to an OTP scheme and wherein the authenticating data (AD) is an OTP data.

11. A **system** (SY) comprising a device and a remote server (RS), **characterized in that** the device is the device (HO) of claim 8.
